# EUROPÄISCHE PATENTSCHRIFT

(11) **EP 2 510 253 B1**
(45) Veröffentlichungstag und Bekanntmachung des Hinweises auf die Patenterteilung: **16.10.2013**
(21) Anmeldenummer: 10773319.8
(22) Anmeldetag: 03.11.2010
(51) Int. Cl.: F16D 25/06, F16D 25/10

(54) **DURCHSCHALTKUPPLUNG**
THROUGH-CONNECTION CLUTCH
SYSTÈME D'EMBRAYAGE À EMBRAYAGES MULTIPLES

(30) Priorität: 10.12.2009 DE 102009047766
(43) Veröffentlichungstag der Anmeldung: 17.10.2012
(73) Patentinhaber: ZF Friedrichshafen AG, 88038 Friedrichshafen (DE)
(72) Erfinder: STEINBORN, Mario, 88046 Friedrichshafen (DE); HERTER, Peter, 88212 Ravensburg (DE); BITZER, Franz, 88048 Friedrichshafen (DE); PETZOLD, Rainer, 88045 Friedrichshafen (DE)
(86) Internationale Anmeldenummer: PCT/EP2010/066679
(87) Internationale Veröffentlichungsnummer: WO 2011/069751

(56) Entgegenhaltungen:
- WO-A1-2006/110945
- DE-A1- 4 200 998
- DE-A1- 4 201 234
- FR-A1- 2 802 995
- FR-E- 64 076
- GB-A- 879 436

## Beschreibung

Die Erfindung betrifft eine Durchschaltkupplung gemäß dem Oberbegriff des Patentanspruchs 1 sowie ein Verfahren zur Ansteuerung einer Durchschaltkupplung gemäß dem Oberbegriff des Patentanspruchs 11.

In Kraftfahrzeugen, insbesondere in Nutzfahrzeugen, werden zunehmend hohe Anforderungen an die zu übertragenden Kräfte im Antriebsstrang gestellt. Die Verwendung einer herkömmlichen Reibungskupplung zur Übertragung des von einem Antriebsmotor kommenden Drehmomentes auf eine Eingangswelle eines Fahrzeuggetriebes führt daher, aufgrund des Zusammenhangs zwischen dem Radius der Reibpartner und dem zu übertragenden Moment sowie unter Berücksichtigung der Reibfähigkeit und der thermischen Belastbarkeit der eingesetzten Materialien, zu baulich immer größeren Kupplungskonstruktionen. Andererseits ist der Bauraum in modernen Fahrzeugen durch eine Vielzahl von Aggregaten und Designvorgaben begrenzt, so dass nach Möglichkeiten gesucht wird, die Baugröße trotz gestiegener Anforderungen zu begrenzen.

Eine Erhöhung der Anpresskräfte der Reibpartner der Reibungskupplung bei gleich bleibendem oder kleinerem Radius würde zu immer höheren Anforderungen an die Aktuatorik führen und damit teurere pneumatische bzw. hydraulische Stelleinrichtungen sowie eine aufwendigere Ansteuerung, insbesondere kostenaufwendige schnellere elektronische Regler zur Bewältigung vorgegebener Regelzyklen, erfordern. Höhere Anpresskräfte können bei einem stark verringerten Kupplungsradius außerdem zu einem unerwünschten Schwingungsverhalten mit hochfrequenten Anteilen oder auch zu Rupfschwingungen führen, was sich ungünstig auf Verschleiß und Bedienungskomfort auswirkt. Zudem stehen neue, höher belastbare Reibmaterialien derzeit nicht zur Verfügung oder sind zumindest sehr kostenaufwändig.

Um dieser Problematik zu entgehen, scheint eine Baugrößenreduktion der Reibungskupplung bzw. eine höhere Drehmomentübertragung bei gleichbleibender Kupplungsgröße ohne den Fahrkomfort zu beeinträchtigen und die Gefahr eines vorzeitigen Kupplungsverschleißes zu erhöhen nur machbar, indem die Belastungsphasen der Kupplung drastisch reduziert werden. Dies kann erreicht werden, wenn die Zeiträume, in denen die Reibungskupplung schlupfend betrieben wird, möglichst kurz gehalten werden und die Reibungskupplung nach Erreichen des Reibschlusses überbrückt wird.

Wenn während der Fahrt, also nicht bei einem Kriechbetrieb oder im Stillstand, die Kupplung bei Drehzahlgleichheit zwischen Motorantriebswelle und Getriebeeingangswelle schlupffrei ist, dann kann eine drehstarre Verbindung zwischen Motor und Getriebeeingang die Reibungskupplung ersetzen. Der notwendige Radius einer schaltbaren Kupplung zur Herstellung einer solchen starren Verbindung kann gegenüber dem Radius von üblichen Reibkupplungsscheiben klein sein; er kann grundsätzlich sogar auf den Wellenradius der zu verbindenden Wellen reduziert sein. Eine Belastungsreduktion der üblicherweise zwischen dem Motor und dem Getriebe eingesetzten Reibungskupplung kann demnach dadurch erreicht werden, dass die Reibungskupplung nur kurzfristig zur Synchronisation der beiden Kupplungsseiten genutzt wird, und ansonsten eine formschlüssige Verbindung zwischen der Kupplungseingangsseite und der Kupplungsausgangsseite hergestellt wird.

Ein Kupplungssystem, das diese Anforderungen erfüllt, muss somit eine Reibungskupplung und eine Formschluss- bzw. Verbindungskupplung aufweisen, die im Kraftfluss parallel geschaltet sind.

Die WO 2006/110945 A1 offenbart eine solche Kupplungsanordnung, bei der eine als Klauenkupplung ausgebildete Formschlusskupplung radial innerhalb einer als Lamellenkupplung ausgebildeten Reibungskupplung angeordnet ist. Innerhalb eines ersten Zylinders ist ein erster, äußerer hydraulischer Stellkolben positioniert, der die Reibungskupplung betätigt. Der äußere Stellkolben bildet seinerseits einen topfartigen zweiten Zylinder, der einen zweiten, inneren hydraulischen Stellkolben aufnimmt, welcher die Klauenkupplung betätigt. Beide Stellkolben sind axial verschiebbar auf einer Antriebswelle befestigt. Zwischen dem äußeren Stellkolben und einem Lamellenpaket, dessen Außenlamellen als Kupplungseingangsseite mit der Antriebswelle und dessen Innenlamellen als Kupplungsausgangsseite mit einer Abtriebswelle verbunden sind, stützt sich eine Tellerfedereinrichtung ab, die den Stellkolben in einer Offenstellung vorspannt. Der innere Stellkolben trägt eingangsseitig eine Anordnung vorstehender Klauen, die mit einer entsprechenden ausgangsseitigen Anordnung von Vertiefungen korrespondiert, welche an der Abtriebswelle angeordnet ist. Zur Beaufschlagung des äußeren Stellkolbens ist eine erste, stirnseitig vorgelagerte äußere Druckkammer vorgesehen. Zwischen dem äußeren Stellkolben und dem inneren Stellkolben ist eine zweite Druckkammer zur Beaufschlagung des inneren Stellkolbens ausgebildet, so dass die beiden Stellkolben und damit die Reibungskupplung und die Klauenkupplung grundsätzlich unabhängig voneinander betätigbar sind.

Nachteilig daran ist, dass die beiden Stellkolben Bestanteile des rotierenden Systems sind, wodurch relativ große unerwünschte Fliehkräfte auf die Lagerung und den Schmiermittelfluss einwirken können. Zudem muss bei einer Verschiebung des äußeren Stellkolbens in Schließrichtung der innere Stellkolben mit bewegt werden. Umgekehrt kann der innere Stellkolben nur in seine Ausgangsstellung zurückfahren, wenn zuvor der äußere Stellkolben in seine Ausgangsstellung gestellt ist. Dadurch werden die Ansteuerungsmöglichkeiten eingeschränkt.

Weiterhin ist aus der DE 42 00 998 A1 eine Kupplungsanordnung für ein Verteilergetriebe eines Allradfahrzeuges bekannt. Darin sind eine Klauenkupplung und eine Reibungskupplung angeordnet. Die Klauenkupplung ist über ein Einrückglied betätigbar, das eine Schaltgabel beaufschlagt, welche eine als Schiebemuffe ausgebildete erste Kupplungshälfte auf einer Keilwelle verschiebt, um mit einer zweiten Kupplungshälfte auf einer Antriebswelle zu koppeln. Diese Klauenkupplung dient zur bedarfsweisen Verbindung einer Hauptantriebswelle, insbesondere einem Hinterachsantrieb, mit einer Nebenantriebswelle, insbesondere einem Vorderachsantrieb. Die im Kraftfluss parallel geschaltete Reibungskupplung dient nur der Synchronisierung der beiden Wellen. Nachteilig daran ist, dass die Klauenkupplung der Reibungskupplung axial vorgelagert ist, so dass die Anordnung eine relativ große Baulänge aufweist. Zudem ist die Betätigung der Klauenkupplung konstruktiv relativ aufwendig. Die Funktionen einer Anfahrkupplung für einen Anfahr-, Rangier-, Roll- oder Segelbetrieb sind darin nicht beschrieben.

Die DE 42 01 234 A1 zeigt eine Zahnkupplung mit einem Schaltglied mit einer Verzahnung, welches auf einem Antriebsteil verschiebbar angeordnet ist und einem Gegenglied mit einer Gegenverzahnung, welches starr auf einem Abtriebsteil angeordnet ist. Dem Schaltglied und dem Gegenglied sind Reibflächen zugeordnet, die vor der Kuppelverzahnung in Reibschluss treten, um das Antriebsteil und das Abtriebsteil zu synchronisieren. Nachteilig daran ist, dass die Reibungskupplung der Zahnkupplung zwar funktionell vorgeschaltet ist, die beiden Kupplungsfunktionen aber nicht unabhängig voneinander steuerbar sind.

Vor diesem Hintergrund liegt der Erfindung die Aufgabe zugrunde, eine Kupplungsvorrichtung mit einer Reibungskupplung und einer Verbindungskupplung der eingangs beschrieben Art zu entwickeln, die einen möglichst geringen Bauraum beansprucht, flexibel ansteuerbar ist und die dennoch kostengünstig herstellbar ist.

Die Lösung dieser Aufgabe ergibt sich aus den Merkmalen des unabhängigen Anspruchs, während vorteilhafte Ausgestaltungen und Weiterbildungen der Erfindung den Unteransprüchen entnehmbar sind.

Der Erfindung liegt die Erkenntnis zugrunde, dass die Übertragung von hohen Drehmomenten, beispielsweise zwischen einem Motor und einem Getriebe im Antriebsstrang eines Nutzfahrzeuges, bei einem kleinen Kupplungsreibdurchmesser durch eine Einlagerung eines formschlüssiges Kuppelteils in einen freigehaltenen Innenraum eines Reibmechanismus einer Reibungskupplung realisiert werden kann. Dabei ist eine einfache kostengünstige Anordnung dadurch erreichbar, dass der Reibmechanismus und das Kuppelteil über eine konzentrisch um eine Getriebeeingangswelle angeordnete, separate Betätigungseinheit betätigbar sind, die nicht Bestandteil der sich drehenden Reib- und Kuppelteile ist.

Demnach geht die Erfindung aus von einer Durchschaltkupplung, beispielsweise zur Drehmomentübertragung zwischen einem Antriebsmotor und einem Getriebe eines Kraftfahrzeuges, mit einer ansteuerbaren Reibungskupplung und mit einer schaltbaren Formschlusskupplung, wobei die Formschlusskupplung radial innerhalb der Reibungskupplung angeordnet ist und die Reibungskupplung sowie die Formschlusskupplung unabhängig voneinander betätigbar sind. Zur Lösung der gestellten Aufgabe sieht die Erfindung vor, dass eine Druckplatte der Reibungskupplung und ein Formschlusselement der Formschlusskupplung konzentrisch, untereinander drehfest und gegeneinander verschiebbar angeordnet sowie über eine Betätigungseinheit betätigbar sind, die von der Druckplatte und dem Formschlusselement rotationsentkoppelt ist, und dass die Formschlusskupplung (3) in Schließrichtung und in Öffnungsrichtung Druckmittelgestenert betätigbar ist.

Unter einer Durchschaltkupplung wird eine Kupplungsanordnung mit einer regelbaren Reibungskupplung und einer schaltbaren Formschlusskupplung verstanden, die eine Baueinheit bilden, wobei die Reibungskupplung vorwiegend für eine Drehzahlregulierung und die Formschlusskupplung für eine Drehmomentübertragung zwischen einer Kupplungseingangsseite und einer Kupplungsausgangsseite vorgesehen ist.

Demnach muss die Reibungskupplung nicht auf das maximale Motordrehmoment sondern nur auf das zum Anfahren maximal notwendige Drehmoment ausgelegt sein und kann dementsprechend im Durchmesser vergleichsweise kleiner dimensioniert sein. Bei der Anforderung des maximalen Drehmomentes, außerhalb von Anfahr-, Rangier- oder Schaltvorgängen, übernimmt hingegen die Formschlusskupplung die Drehmomentübertragung, welche nur einen geringen Durchmesser beansprucht und Platz sparend konzentrisch innerhalb der Reibungskupplung angeordnet ist.

Die Erfindung realisiert ein solches Kupplungssystem mit einem besonders einfachen, kompakten und kostengünstigen Aufbau, bei dem eine Druckplatte der Reibungskupplung und ein Formschlusselement der Formschlusskupplung von einer Betätigungseinheit separiert sind.

Die Betätigungseinheit kann vorteilhaft einen radial äußeren Stellkolben für die Reibungskupplung sowie einen radial inneren Stellkolben für die Formschlusskupplung umfassen, wobei die Stellkolben jeweils in einem eigenen Stellzylinder geführt und druckmittelgesteuert, vorzugsweise pneumatisch gesteuert sind. Demnach kann die Reibkupplungskomponente der Durchschaltkupplung als eine durch Schließkraft zu schließende Kupplung, also vom "Unbetätigt Offen"-Typ, ausgebildet sein.

Diese Auslegung ist besonders vorteilhaft, da bei vorliegendem Formschluss die Reibungskupplung nicht gebraucht wird und somit einfach durch eine Druckentlastung geöffnet bzw. offen gehalten werden kann. Dadurch ergibt sich auch ein zusätzlicher Sicherheitsgewinn, da ein unerwünschtes Schließen der Kupplung, beispielsweise durch eine unzureichende pneumatische bzw. hydraulische Dichtheit eines Stellzylinders bei sehr tiefen Umgebungstemperaturen, vermieden wird.

Die vollständige Druckmittelsteuerung der Kupplung ermöglicht zudem eine sehr genaue, quasi hysteresefreie Regelung der Drehmomentübertragung in beiden Betätigungsrichtungen, insbesondere bei geringen Drehmomenten, so dass beispielsweise Zahn-auf-Zahn-Stellungen im Getriebe aufgelöst werden können.

Die Verwendung einer mit Betätigungskraft geschlossenen Reibungskupplung hat zudem die Vorteile eines vergleichsweise geringen Totweges und einer geringen axialen Baugröße. Außerdem ist eine verbesserte Kupplungsdynamik bei der Ansteuerung erreichbar.

Die Beaufschlagung des, beispielsweise als eine Druckplatte ausgebildeten Anpresselementes sowie des, beispielsweise als eine mit Klauen oder Zähnen bestückten Formschlussplatte ausgebildeten Formschlusselementes durch die zugehörigen Stellkolben kann über Axiallager erfolgen.

Das Kupplungsübertragungsmoment der Reibungskupplung ist vorteilhaft über einen Drucksensor regelbar, so dass ein komfortabler und effektiver Schlupfbetrieb bei den temporären Einsätzen der Reibungskupplung erreicht wird. Der Schließ- bzw. Öffnungsvorgang sowie die Position der, beispielsweise als Klauen- oder Zahnkupplung ausgebildeten Formschlusskupplung, können vorteilhaft über eine einfache Wegsensorik gesteuert bzw. überwacht sein.

Grundsätzlich ist anstelle der besonders bevorzugten Anordnung mit zwei pneumatisch gesteuerten Stellkolben und zwei Zylindern auch ein Aufbau mit einem Zylinder und zwei Stellkolben oder mit einem Zylinder mit Stellkolben und einer konventionellen, von einem Wegsensor gesteuerten überbrückbaren Tellerfeder-Reibkupplung möglich.

Der erfindungsgemäße Aufbau der Durchschaltkupplung und dessen Betätigung kann vollständig druckmittelgesteuert, d.h. gänzlich ohne Federmittel realisiert sein, was sich Kosten sparend auswirkt. Selbstverständlich können jedoch auch Federmittel, beispielsweise zur Sicherung eines Luftspaltes bei drucklos geöffneter Kupplung, zur Erzeugung einer Rückstellkraft entgegen der Stellrichtung der Stellkolben, zur Erzeugung einer Vorspannung der Stellkolben oder zur Anfederung der Reibbeläge der Reibungskupplung vorgesehen sein.

Die erfindungsgemäße Durchschaltkupplung kann insbesondere in einem Nutzfahrzeug mit einem Verbrennungsmotor mit hohem Drehmoment und einem automatisierten Schaltgetriebe zur Drehmomentübertragung während der Fahrt und zusätzlich für die Funktionen Anfahren, Rangieren, Öffnen und Schließen des Antriebsstrangs bei Getriebeschaltungen vorgesehen sein.

Die Durchschaltkupplung stellt demnach die Grundfunktionen einer konventionellen Anfahrkupplung sowie ein Vielzahl zusätzlicher Funktionen zur Verfügung, wovon nachfolgend einige genannt sind:
Grundsätzlich kann die Angleichung der Drehzahl zwischen dem Verbrennungsmotor und dem Getriebeeingang wie bei einer konventionellen Kupplung über Reibung erfolgen.

Bei Anfahrvorgängen kann der Motor und der Getriebeeingang über die Reibungskupplung entsprechend des Fahrerwunsches synchronisiert und anschließend die drehstarre Formschlussverbindung geschaltet werden.

Bei Rangiervorgängen können bei offener Formschlusskupplung der Motor und der Getriebeeingang hinsichtlich ihrer Drehzahlen über die Reibungskupplung miteinander synchronisiert werden.

Bei geschlossenem Antriebsstrang kann die Drehmomentübertragung allein über die formschlüssige Verbindung erfolgen.

Die formschlüssige Verbindung wird bei erkannter Drehzahlgleichheit zwischen Motordrehzahl und Getriebeeingangsdrehzahl eingeschaltet. Wenn die formschlüssige Verbindung hergestellt ist, kann die Schließkraft auf die Reibungskupplung aufgehoben werden.

Das Öffnen der Kupplung bei einem Schaltvorgang kann grundsätzlich durch Trennen der formschlüssigen Verbindung erfolgen, sofern die Reibungskupplung bereits nach Herstellung des Formschusses geöffnet wurde. Um den Schaltvorgang vorzubereiten, kann jedoch auch zunächst die Reibungskupplung wieder geschlossen, dann die formschlüssige Verbindung aufgehoben werden, und anschließend kann ein gezielter Drehmomentabbau über die Reibungskupplung erfolgen.

Ein gezielter Drehmomentabbau über die Reibungskupplung kann auch zum Ausrollen des Fahrzeuges oder insbesondere beim Einsatz eines an sich bekannten vortrieblosen Roll- oder Segelmodus verwendet werden.

Ein erforderlicher Drehmomentabbau kann jedoch auch durch eine gezielte Motormomentbeeinflussung erfolgen, so dass zur Einleitung der Roll- oder Segelphase des Fahrzeuges die Kupplung ohne vorherigen Schlupfbetrieb der Reibungskupplung durch Aufhebung der Formschlussverbindung direkt geöffnet werden kann. Dadurch wird die Nutzungshäufigkeit der Reibungskupplung weiter verringert.

Weiterhin ist es durch die Auslegung der Reibungskupplung als eine durch Schließkraft zu schließende Kupplung möglich, bei Fahrzeugstillstand und in Neutral geschaltetem Getriebe die Durchschaltkupplung ohne permanente Betätigung bei laufendem oder ausgeschaltetem Motor offen zu halten. Insbesondere kann dadurch bei laufendem Motor das so genannte Getrieberasseln vermieden werden, wodurch der Betriebskomfort verbessert wird.

Andererseits ist es möglich, mittels der Formschlusskupplung die Kupplung bei Fahrzeugstillstand und in Neutral geschaltetem Getriebe zu schließen und weitgehend ohne permanente Betätigung geschlossen zu halten. Dadurch kann beispielsweise eine getriebeseitige Ölpumpe bei Fahrzeugstillstand betrieben werden.

Weiterhin ist es möglich, die Kupplung bei Schaltungen nach zuvor mittels einer Motorbeeinflussung erzeugter Drehmomentfreiheit im Antriebsstrang bei offener Reibkupplung allein durch Trennen der Formschlussverbindung zu öffnen.

Umgekehrt ist auch ein Schließen der Kupplung nach einem Schaltvorgang ohne Betätigung der Reibungskupplung durch alleiniges Schließen der Formschlusskupplung möglich, wenn zuvor die Motordrehzahl über eine Motorbeeinflussung synchronisiert wird.

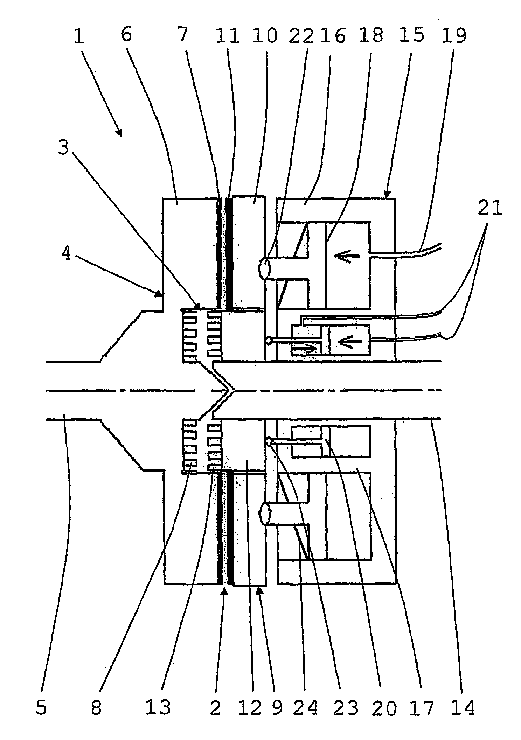

Zur Verdeutlichung der Erfindung ist der Beschreibung eine Zeichnung eines Ausführungsbeispiels beigefügt. In dieser zeigt die einzige Figur eine schematisch vereinfachte Durchschaltkupplung im Längsschnitt. Diese Durchschaltkupplung ist als pneumatisch betätigbare Kupplungsanordnung 1 ausgebildet, wie sie im Antriebsstrang eines Nutzfahrzeugs zwischen einem Verbrennungsmotor und einem automatisiert schaltenden Übersetzungsgetriebe angeordnet sein kann.

Die Kupplungsanordnung 1 weist eine radial äußere Reibungskupplung 2 und eine radial innere Formschlusskupplung 3 auf. Eine Kupplungseingangsseite 4, die mit einer Kupplungsantriebswelle 5, beispielsweise der Kurbelwelle des Verbrennungsmotors, drehfest verbunden ist, besteht aus der Schwungscheibe 6 des Motors, welche einen Reibbelag 7 trägt sowie einer radial innerhalb der Reibfläche axial zurückversetzten Verzahnung 8. Eine Kupplungsausgangsseite 9 weist ein Druckplatte 10 mit einer Reibfläche und einem Formschlusselement 12 mit einer mit der Verzahnung 8 der Kupplungseingangsseite 4 korrespondierenden Gegenverzahnung 13 auf. Die Druckplatte 10 und das Formschlusselement 12 sind untereinander drehfest und gegeneinander axial verschiebbar auf einer Kupplungsabtriebswelle 14, beispielsweise einer Getriebeeingangswelle, angeordnet. Zwischen der Schwungscheibe 6 und der Druckplatte 10 befindet sich eine Kupplungsscheibe 11, hier ohne Torsionsdämpfer dargestellt, mit beidseitigen Reibbelägen, die jeweils mit den Reibbelag 7 der Schwungscheibe 6 und mit der Reibfläche der Druckplatte 10 zusammenwirken.

Die Reibungskupplung 2 und die Formschlusskupplung 3 sind über eine separate Betätigungseinheit 15, welche die Kupplungsabtriebswelle 14 umgibt, ansteuerbar. Die Betätigungseinheit 15 kann in Anlehnung an das von der Anmelderin bekannte ConAct (Concentric Actuation) - Kupplungssystem konzipiert sein. Bei dem ConAct-System ist die herkömmliche Kupplungsbetätigung mit Gabelbetätigungsglied, Kupplungskraftverstärker, Gabel und Ausrücker durch einen konzentrisch um eine Getriebeeingangswelle angeordneten pneumatischen Ausrückzylinder ersetzt, wodurch sich Betriebs- und Kostenvorteile ergeben.

Eine erfindungsgemäße Betätigungseinheit 15 besteht aus zwei konzentrischen Ringzylindern 16, 17. In dem äußeren Ringzylinder 16 ist ein erster Stellkolben 18 axial geführt, der über eine erste Druckmittelversorgung 19 in Schließrichtung zur Ausübung eines Anpressdruckes auf die Druckplatte 10 der Reibungskupplung 2 druckmittelgesteuert betätigbar ist. Der Stellkolben 18 wirkt über eine erste Axiallagerung 22 mit der Druckplatte 10 zusammen. Zur Sicherstellung eines Luftspaltes zwischen den Reibbelägen bzw. Reibflächen in drucklosem Zustand ist ein in Öffnungsrichtung des Kolbens 18 wirksames Federmittel 24 im Zylinderraum des äußeren Ringszylinders 16 angeordnet.

In dem radial inneren Ringzylinder 17 ist ein zweiter Stellkolben 20 axial geführt, der von einer zweiten, bidirektional wirksamen Druckmittelversorgung 21 ansteuerbar ist. Dieser Stellkolben 20 besitzt eine zweite Axiallagerung 23 mit dem Formschlusselement 12, so dass die Formschlussverbindung mittels des Stellkolbens 20 sowohl herstellbar als auch aufhebbar ist.

Um die beiden Kupplungsseiten 4, 9 drehfest miteinander zu verbinden, wird zum Zwecke der Synchronisation zwischen Motor und Getriebe zunächst der äußere Stellkolben 18 druckmittelbeaufschlagt, wodurch er in seinem Stellzylinder 16 verschoben und die Druckplatte 10 in Richtung zum eingangsseitigen Reibring 6 bewegt wird, bis die korrespondierenden Reibflächen zur gegenseitigen Anlage kommen. Über eine nicht dargestellte, jedoch an sich bekannte Steuerungseinrichtung mit einer Drucksensorik, wird der Anpressdruck im Schlupfbetrieb geregelt erhöht, bis bei Drehzahlgleichheit zwischen den beiden Kupplungsseiten 4, 9 und damit zwischen der Antriebswelle 5 und der Getriebeeingangswelle 14 Reibschluss oder annähernder Reibschluss besteht.

Unmittelbar anschließend oder mit dem Reibschluss überlappend wird der Formschluss hergestellt, indem das Formschlussteil 12 durch den inneren Stellkolben 20 druckmittelbetätigt axial nach außen verschoben wird, wodurch die motorseitige Verzahnungen 8 und getriebeseitige Gegenverzahnung 13 in Eingriff kommen. Wenn die formschlüssige Verbindung geschaltet ist, kann der äußere Stellkolben 18 druckentlastet und damit die Schließkraft an der Reibungskupplung 2 aufgehoben werden.

Zur Aufhebung der Formschlussverbindung wird der innere Stellkolben 20 mit einem Stelldruck in Öffnungsrichtung beaufschlagt, wodurch das Formschlusselement 12 zurückgezogen wird. Die tatsächliche Position der Formschlusskupplung 3 wird dabei durch einen nicht dargestellten Wegsensor überwacht.

Je nach Betriebssituation, beispielsweise bei einem Anfahrvorgang oder bei Schaltvorgängen zum Gangwechsel, wird die Reibungskupplung 2 gezielt nur so lange wie nötig angesteuert, um auf sichere und komfortable Weise den Formschluss im Antriebsstrang zwischen Motor und Getriebeeingang herstellen bzw. aufheben zu können.

### Bezugszeichenliste

- 1: Kupplungsanordnung
- 2: Reibungskupplung
- 3: Formschlusskupplung
- 4: Kupplungseingangsseite
- 5: Kupplungsantriebswelle
- 6: Reibring
- 7: Reibbelag
- 8: Verzahnung
- 9: Kupplungsausgangsseite
- 10: Druckplatte
- 11: Kupplungsscheibe
- 12: Formschlusselement
- 13: Verzahnung
- 14: Kupplungsabtriebswelle
- 15: Betätigungseinheit
- 16: Ringzylinder
- 17: Ringzylinder
- 18: Stellkolben
- 19: Druckmittelversorgung
- 20: Stellkolben
- 21: Druckmittelversorgung
- 22: Axiallager
- 23: Axiallager
- 24: Federmittel

## Patentansprüche

1. Durchschaltkupplung, beispielsweise zur Drehmomentübertragung zwischen einem Antriebsmotor und einem Getriebe eines Kraftfahrzeuges, mit einer ansteuerbaren Reibungskupplung (2) und mit einer schaltbaren Formschlusskupplung (3), wobei die Formschlusskupplung (3) radial innerhalb der Reibungskupplung (2) angeordnet ist und die Reibungskupplung (2) sowie die Formschlusskupplung (3) unabhängig voneinander betätigbar sind, wobei eine Druckplatte (10) der Reibungskupplung (2) und ein Formschlusselement (12) der Formschlusskupplung (3) konzentrisch, untereinander drehfest und gegeneinander verschiebbar angeordnet sowie über eine Betätigungseinheit (15) betätigbar sind, **dadurch gekennzeichnet, dass** die Betätigungseinheit (15) von der Druckplatte (10) und dem Formschlusselement (12) rotationsentkoppelt ist, und dass die Formschlusskupplung (3) in Schließrichtung und in Öffnungsrichtung druckmittelgesteuert betätigbar ist.

2. Durchschaltkupplung nach Anspruch 1, **dadurch gekennzeichnet, dass** die Betätigungseinheit (15) einen radial äußeren Stellkolben (18) für die Reibungskupplung (2) und einen radial inneren Stellkolben (20) für die Formschlusskupplung (3) umfasst, wobei die Stellkolben (18, 20) jeweils in einem eigenen Stellzylinder (16, 17) geführt sind.

3. Durchschaltkupplung nach Anspruch 1 oder 2, **dadurch gekennzeichnet, dass** das Formschlusselement (12) und die Druckplatte(10) über Axiallager (22, 23) mit den zugehörigen Stellkolben (18, 20) zusammenwirken.

4. Durchschaltkupplung nach einem der Ansprüche 1 bis 3, **dadurch gekennzeichnet, dass** das über die Reibungskupplung (2) übertragene Drehmoment mit Hilfe eines Drucksensors regelbar ist.

5. Durchschaltkupplung nach einem der Ansprüche 1 bis 4, **dadurch gekennzeichnet, dass** der Stellweg der Formschlusskupplung (3) mittels eines Wegsensors einstellbar und überwachbar ist.

6. Durchschaltkupplung nach einem der Ansprüche 1 bis 5, **dadurch gekennzeichnet, dass** die Formschlusskupplung (3) als eine Klauenkupplung oder eine Zahnkupplung ausgebildet ist.

7. Durchschaltkupplung nach einem der Ansprüche 1 bis 6, **dadurch gekennzeichnet, dass** die Betätigungseinheit (15) pneumatisch oder hydraulisch ansteuerbar ist.

8. Durchschaltkupplung nach einem der Ansprüche 1 bis 7, **dadurch gekennzeichnet, dass** Federmittel (24), welche zur Sicherung eines Luftspaltes bei drucklos geöffneter Reibungs- und/oder Formschlusskupplung (2, 3) und/oder zur Erzeugung einer Rückstellkraft entgegen einer Stellrichtung wenigstens eines Stellkolbens (18, 20) und/oder zur Erzeugung einer Vorspannung wenigstens eines Stellkolbens (18, 20) der Betätigungseinheit (15) wirksam sind, angeordnet sind.

## Claims

1. Through-connection clutch, for example for transmitting torque between a drive engine and a transmission of a motor vehicle, having an activatable friction clutch (2) and having a switchable positive-locking clutch (3), wherein the positive-locking clutch (3) is arranged radially within the friction clutch (2) and the friction clutch (2) and the positive-locking clutch (3) can be operated independently of one another, wherein a thrust plate (10) of the friction clutch (2) and one positive-locking element (12) of the positive-locking clutch (3) are arranged so as to be concentric, rotationally conjoint with respect to one another and displaceable relative to one another and can be operated by means of an operation unit (15), **characterized in that** the operation unit (15) is rotationally decoupled from the thrust plate (10) and from the positive-locking element (12), and **in that** the positive-locking clutch (3) can be operated in a closing direction and in an opening direction in a manner controlled by pressure medium.

2. Through-connection clutch according to Claim 1, **characterized in that** the operation unit (15) comprises a radially outer actuating piston (18) for the friction clutch (2) and a radially inner actuating piston (20) for the positive-locking clutch (3), wherein the actuating pistons (18, 20) are guided in each case in a dedicated actuating cylinder (16, 17).

3. Through-connection clutch according to Claim 1 or 2, **characterized in that** the positive-locking element (12) and the thrust plate (10) interact with the associated actuating pistons (18, 20) via axial bearings (22, 23).

4. Through-connection clutch according to one of Claims 1 to 3, **characterized in that** the torque transmitted via the friction clutch (2) can be regulated with the aid of a pressure sensor.

5. Through-connection clutch according to one of Claims 1 to 4, **characterized in that** the actuation travel of the positive-locking clutch (3) can be adjusted and monitored with the aid of a travel sensor.

6. Through-connection clutch according to one of Claims 1 to 5, **characterized in that** the positive-locking clutch (3) is in the form of a jaw clutch or a toothed clutch.

7. Through-connection clutch according to one of Claims 1 to 6, **characterized in that** the operation unit (15) can be pneumatically or hydraulically activated.

8. Through-connection clutch according to one of Claims 1 to 7, **characterized in that** spring means (24) are provided which act so as to ensure an air gap when the friction and/or positive-locking clutch (2, 3) is in the unpressurized, open state and/or to generate a restoring force counter to an actuation direction of at least one actuating piston (18, 20) and/or to generate a preload of at least one actuating piston (18, 20) of the operation unit (15).

## Revendications

1. Embrayage de changement de rapports, par exemple pour le transfert de couple entre un moteur d'entraînement et une boîte de vitesses d'un véhicule automobile, comprenant un embrayage à friction commandable (2) et un embrayage à engagement positif commutable (3), l'embrayage à engagement positif (3) étant disposé radialement à l'intérieur de l'embrayage à friction (2) et l'embrayage à friction (2) ainsi que l'embrayage à engagement positif (3) pouvant être actionnés indépendamment l'un de l'autre, une plaque de pression (10) de l'embrayage à friction (2) et un élément d'engagement positif (12) de l'embrayage à engagement positif (3) étant disposés concentriquement, de manière solidaire en rotation l'un par rapport à l'autre et de manière déplaçable l'un par rapport à l'autre et pouvant être actionnés par le biais d'une unité d'actionnement (15), **caractérisé en ce que** l'unité d'actionnement (15) est désaccouplée en rotation de la plaque de pression (10) et de l'élément d'engagement positif (12) et **en ce que** l'embrayage à engagement positif (3) peut être actionné dans la direction de fermeture et dans la direction d'ouverture de manière commandée par un fluide sous pression.

2. Embrayage de changement de rapports selon la revendication 1, **caractérisé en ce que** l'unité d'actionnement (15) comprend un piston de commande radialement extérieur (18) pour l'embrayage à friction (2) et un piston de commande radialement intérieur (20) pour l'embrayage à engagement positif (3), les pistons de commande (18, 20) étant chacun guidés dans un cylindre de commande propre (16, 17).

3. Embrayage de changement de rapports selon la revendication 1 ou 2, **caractérisé en ce que** l'élément d'engagement positif (12) et la plaque de pression (10) coopèrent par le biais de paliers axiaux (22, 23) avec les pistons de commande associés (18, 20).

4. Embrayage de changement de rapports selon l'une quelconque des revendications 1 à 3, **caractérisé en ce que** le couple transmis par le biais de l'embrayage à friction (2) peut être réglé à l'aide d'un capteur de pression.

5. Embrayage de changement de rapports selon l'une quelconque des revendications 1 à 4, **caractérisé en ce que** la course de commande de l'embrayage à engagement positif (3) peut être ajustée et contrôlée au moyen d'un capteur de position.

6. Embrayage de changement de rapports selon l'une quelconque des revendications 1 à 5, **caractérisé en ce que** l'embrayage à engagement positif (3) est réalisé sous forme d'embrayage à griffes ou d'embrayage à dents.

7. Embrayage de changement de rapports selon l'une quelconque des revendications 1 à 6, **caractérisé en ce que** l'unité d'actionnement (15) peut être commandée pneumatiquement ou hydrauliquement.

8. Embrayage de changement de rapports selon l'une quelconque des revendications 1 à 7, **caractérisé en ce que** des moyens de ressort (24) sont prévus, lesquels agissent de manière à fixer un entrefer lorsque l'un embrayage à friction et/ou à engagement positif (2, 3) est ouvert sans pression et/ou de manière à produire une force de rappel à l'encontre d'une direction de commande d'au moins un piston de commande (18, 20) et/ou de manière à produire une précontrainte d'au moins un piston de commande (18, 20) de l'unité d'actionnement (15).
